(19) Europäisches Patentamt
European Patent Office
Office européen des brevets

(11) **EP 2 084 758 B1**

(12) **EUROPÄISCHE PATENTSCHRIFT**

(45) Veröffentlichungstag und Bekanntmachung des Hinweises auf die Patenterteilung:
**17.10.2012 Patentblatt 2012/42**

(21) Anmeldenummer: **07846526.7**

(22) Anmeldetag: **02.11.2007**

(51) Int Cl.:
**H02N 2/02** *(2006.01)* **H02N 2/10** *(2006.01)*

(86) Internationale Anmeldenummer:
**PCT/EP2007/009511**

(87) Internationale Veröffentlichungsnummer:
**WO 2008/052785 (08.05.2008 Gazette 2008/19)**

(54) **TRÄGHEITSANTRIEBSVORRICHTUNG**

INERTIA DRIVE DEVICE

DISPOSITIF D'ENTRAÎNEMENT PAR INERTIE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **02.11.2006 DE 102006052175**

(43) Veröffentlichungstag der Anmeldung:
**05.08.2009 Patentblatt 2009/32**

(73) Patentinhaber: **SmarAct GmbH**
**26135 Oldenburg (DE)**

(72) Erfinder:
• **RASS, Christoph**
**26131 Oldenburg (DE)**
• **KORTSCHACK, Axel**
**26121 Oldenburg (DE)**

(74) Vertreter: **Meissner, Bolte & Partner**
**Anwaltssozietät GbR**
**Widenmayerstrasse 48**
**80538 München (DE)**

(56) Entgegenhaltungen:
WO-A-98/19347        DE-A1- 4 440 758
US-A1- 2004 036 382    US-B1- 6 188 161

**Beschreibung**

Die Erfindung betrifft eine Trägheitsantriebsvorrichtung mit mindestens einem auf einer Reibfläche beweglich gelagertem Reibkörper, der zur Beschleunigung in vorgegebene Bewegungsrichtungen antreibbar ist.

Trägheitsantriebsvorrichtungen sind beispielsweise aus D. W. Pohl: Dynamic piezoelectric translation devices, in Review of Scientific Instruments, vol. 58 (1) January 1987, Seiten 54 bis 57 und aus Ph. Niedermann, R. Emch, P. Descouts: Simple piezoelectric translation device, in: Review of Scientific Instruments, vol. 59 (2) February 1988, Seiten 368 bis 369 bekannt. In diesen Dokumenten ist das Grundprinzip von linearen Trägheitsantriebsvorrichtungen beschrieben, bei dem ein piezoelektrischer Aktor vorgesehen ist, der mit einem sägezahnähnlichen periodischen Signal beaufschlagt wird und eine Beschleunigung relativ zu einem reibschlüssig mit dem Aktor verbundenen beweglich gelagerten Teil bewirkt. Bei einer niedrigen Beschleunigung des piezoelektronischen Aktors folgt das bewegliche Teil aufgrund des Reibschlusses dem Aktor. Bei einer hohen Beschleunigung des piezoelektrischen Aktors hingegen rutscht das bewegliche Teil relativ zum Aktor durch, sobald die Trägheitskraft des beweglichen Teils größer als die Reibungskraft zwischen beweglichem Teil und Aktor wird.

Trägheitsantriebsvorrichtungen werden in zwei Untergruppen unterteilt, nämlich die Impact-Drive-Antriebe und die Slip-Stick-Antriebe.

Der Impact-Drive-Antrieb besteht aus zwei Körpern A und B, die über eine Piezokeramik C verbunden sind. Der Körper A steht in Kontakt mit einer Oberfläche, über die er rutschen kann, wenn die statische Reibungskraft überwunden wird. Der zweite Körper B, der nicht mit der Oberfläche in Kontakt steht, kann durch die Verformung der Piezokeramik bewegt werden. So lange die Beschleunigung von B verhältnismäßig niedrig ist, wird dabei der Körper A aufgrund der Reibung nicht über die Oberfläche rutschen. Jedoch bei einer hohen Beschleunigung wird der Körper A über die Oberfläche gleiten, da die Trägheitskraft des Körpers B größer ist als die Reibungskraft. Wird nun der Körper B abwechselnd in die eine Richtung stark und in die andere Richtung weniger stark beschleunigt, so kann eine schrittweise Bewegung der gesamten Konstruktion erzielt werden.

Slip-Stick-Antriebe sind detailliert in A. Bergander: "Control wear testing and integration of slip-stick micropositioning", Dissertation Nr. 2843, EPFL Lausanne, Schweiz, 2003, sowie in der WO 2004/077584 beschrieben.

Die Bewegung der im Grunde leistungsfähigeren Slip-Stick-Antriebe setzt sich ebenfalls. aus zwei Bewegungsarten zusammen, wobei eine abweichende Anordnung der Komponenten eine bessere Funktion der Positionierer ermöglicht. Bei Slip-Stick-Antrieben ist ein Aktor D in der Regel eine piezoelektrische Keramik auf einer Seite an einer nicht beweglichen Masse befestigt. Ein Körper E steht mit der Piezokeramik oder mit einem weiteren leichten, fest an der Piezokeramik befestigten Körper in Reibkontakt. Wird die piezoelektrische Keramik durch das Anlegen einer sich allmählich ändernden Spannung langsam verformt, so wird der Körper E mitbewegt. Dieser Modus wird häufig Feinpositioniermodus oder Scanmodus genannt. Der Körper E kann dabei mit einer sehr hohen Auflösung, kleiner als ein Nanometer, positioniert werden. Jedoch ist der Arbeitsbereich in diesem Modus in der Regel auf wenige Mikrometer beschränkt. Um diesen Nachteil auszugleichen, wird der so genannte Grobpositioniermodus verwendet. Beim Grobpositioniermodus wird der piezokeramische Aktor D durch eine sich schnell ändernde elektrische Spannung verformt und dadurch die Masse des Körpers E beschleunigt. Wenn die Trägheitskraft des Körpers E größer als die Haftreibung ist, so kommt es zu einer relativen Bewegung zwischen dem Körper E und dem piezokeramischen Aktor D. Folgt regelmäßig auf eine hohe Beschleunigung des Körpers E in eine Richtung eine geringe Beschleunigung in entgegengesetzter Richtung, so kann eine Positionierung über einen theoretisch unbegrenzten Arbeitsbereich durchgeführt werden.

Diese Konstruktion weist gegenüber den Impact-Drive-Antrieben den Vorteil auf, dass die hohe mögliche Auflösung der Piezokeramik im Feinpositioniermodus genutzt werden kann, um mit eben dieser hohen Auflösung zu positionieren. Die Anordnung der Komponenten kann beim Slip-Stick-Antrieb verändert werden, ohne das Antriebsprinzip zu verletzen. Eine zweite mögliche Konfiguration sieht vor, den piezokeramischen Aktor oder einen an diesem Aktor befestigten, leichten Reibkörper beweglich auf einer Oberfläche oder in einer Führung zu lagern. Auf der anderen Seite des Aktors ist ein weiterer Körper befestigt. Durch eine asymmetrische Ansteuerung des Aktors kann eine makroskopische Bewegung erzielt werden. Durch eine quasistatische Ansteuerung des Aktors kann eine hochauflösende Bewegung erzielt werden. Dieser Modus wird auch Feinpositioniermodus genannt.

Slip-Stick-Antriebe, mit denen sich lineare Bewegungen erzeugen lassen, sind beispielsweise in US 5,237,238 A1, EP 0 747 977 A1, EP 0 823 738 B1 und der oben genannten WO 2004/077584 A1 beschrieben.

WO 00/54004 A1, WO 02/43162 A1 und WO 2004/077584 A1 offenbaren zudem Slip-Stick-Antriebe, mit denen sich rotatorische Bewegungen sowie eine Kombination von linearen und rotatorischen Bewegungen erzeugen lassen.

Slip-Stick-Antriebe stellen eine einfache Möglichkeit dar, über größere Distanzen zu positionieren. Der kleine Hub der Piezokeramik wird ausgenutzt, indem viele kleine Schritte realisiert werden, die in der Summe makroskopische Bewegungen ergeben.

Bisherigen Trägheitsantrieben ist gemein, dass sie eine verhältnismäßig große bewegungsrichtungsabhängige Asymmetrie in Hinblick auf Kraft und Geschwindigkeit im Bereich mehrerer Prozent aufweisen. Das liegt unter anderem in der Tatsache begründet, dass die in der Regel verwendeten Piezokeramiken beim Zusammenziehen oder Ausdehnen jeweils ein leicht unterschiedliches Verhalten aufweisen. Auch äußere Einflüsse, wie beispielsweise Gravitationskräfte, führen zu einem unsymmetrischen Laufverhalten. Sind diese Asymmetrien störend, muss entsprechend dem Stand der Technik ein großer Aufwand betrieben werden, um diese zu eliminieren.

Eine noch verhältnismäßig einfache Möglichkeit besteht darin, eine Vorspannung durch eine mechanische Feder zu erzeugen, was allerdings mit einem zusätzlichen Aufwand für Bauteile und Montage einhergeht. In JP 04-207982 ist eine Variante beschrieben, bei der eine zweite Masse durch ein Piezoelement so beschleunigt wird, dass der Anpressdruck immer dann verringert wird, wenn eine Slip-Phase vorliegt.

In JP 04-030989 wird der Reibkörper während der Stick-Phase durch eine Klemmvorrichtung gehalten. Das bedeutet, dass mit mehreren Aktoren gearbeitet werden muss.

Alle beispielhaft genannten Lösungen erfordern einen relativ großen mechanischen Aufwand. In manchen Fällen ist eine zusätzliche elektrische Schaltung vorzusehen.

In US 6,188,161 B1 ist das Prinzip einer Trägheitsantriebsvorrichtung bekannt, wonach der Reibkörper der Trägheitsantriebsvorrichtung in Abhängigkeit von der Beschleunigung deformierbar ist und derart ausgestaltet ist, dass eine durch die Einwirkung einer Beschleunigung verursachte Verformung des Reibkörpers zur Beeinflussung der Reibeigenschaften zwischen Reibkörper und Reibfläche auf die Reibfläche geleitet wird.

Aufgabe der vorliegenden Erfindung ist es daher, eine verbesserte Trägheitsantriebsvorrichtung zu schaffen, die das oben genannte Problem des asymmetrischen Verhaltens ohne zusätzlichen Aufwand löst und eine spezifische Variation der zwischen der Reibfläche und dem Reibkörper wirkenden Klemmkraft in Abhängigkeit der Beschleunigung ermöglicht.

Die Aufgabe wird mit der Trägheitsantriebsvorrichtung der eingangs genannten Art dadurch gelöst, dass der Reibkörper in Abhängigkeit von der Beschleunigung deformierbar ist und derart ausgestaltet ist, dass eine durch die Einwirkung einer Beschleunigung verursachte Verformung des Reibkörpers zur Beeinflussung der Reibeigenschaften zwischen Reibkörper und Reibfläche auf die Reibfläche geleitet wird. Der für den Antrieb benötige Reibkörper wird somit so gestaltet, dass dieser abhängig von der Bewegungsphase, entweder Slip-Phase (schnelle Beschleunigung) oder Stick-Phase (langsame Beschleunigung), unterschiedliche Anpressdrücke aufbringt, indem dieser aufgrund der Beschleunigung in geeigneter Weise verformt wird und die Verformung auf die Reibflächen wirkt.

Die Bewegungsrichtung des Reibkörpers ist durch den mechanischen Aufbau der linearen oder rotorischen Trägheitsantriebsvorrichtung festgelegt.

Neben der Möglichkeit, das asymmetrische Verhalten zu reduzieren oder den Erfordernissen entsprechend anzupassen, ohne dass zusätzliche Bauteile oder Elektronik benötigt werden, kann das Laufverhalten der Trägheitsantriebe verbessert werden, so dass kleinere Schritte möglich sind, ohne dass die Blockierkraft des Positionierers reduziert wird.

Durch das nachträgliche Beaufschlagen der Reibkörper mit einer Masse, ist es möglich, das Laufverhalten den jeweiligen Bedürfnissen anzupassen.

Diese Eigenschaften bieten wichtige Freiheiten bei Auslegung der Antriebe. Trägheitsantriebe, die eine auslegbare oder sogar einstellbare Asymmetrie aufweisen, können, anders als bisher, in einer Vielzahl von Applikationen Anwendung finden und die klassischen Elektromotoren vielfach verdrängen. Sie können als lineare oder rotorische Trägheitsantriebsvorrichtungen realisiert werden.

Mindestens einer der Reibkörper wird so ausgebildet, dass dieser durch die der Beschleunigung entgegenwirkenden Trägheitskräfte verformt wird. Wirkt die Verformung erfindungsgemäß auf die Reibflächen, wird die vorhandene Anpresskraft verstärkt bzw. verringert. Die Anpresskraft hat wesentlichen Einfluss auf die Haft- und Gleitreibung und damit auf das Laufverhalten des Positionierers. Somit kann auf das asymmetrische Laufverhalten Einfluss genommen werden.

Des weiteren werden die Reibkörper nachträglich mit Massen an geeigneten Stellen versehen, z. B. indem Teile angeklebt werden, so dass der Effekt der variablen Anpresskraft den jeweiligen Bedürfnissen angepasst werden kann.

Die Bewegung kann auf die bei Trägheitsantrieben übliche Weise erzeugt werden, indem an die Elektroden der Piezokeramik ein asymmetrisches Spannungssignal angelegt wird. Dabei kann es sich um verschiedene Kurvenformen handeln, wie beispielsweise Sägezahnfunktionen und parabolische Kurven. Wichtig ist, dass ein deutlicher Unterschied zwischen einer schnellen und langsamen Beschleunigung erzeugt wird.

Besonders vorteilhaft ist der Reibkörper zur Verstärkung oder Reduzierung der Kraft so auszugestalten, dass die Kräfte aufgrund der Verformung lediglich auf die Reibflächen und nicht auf die umgebenen Konstruktionselemente wirken. Beispielsweise wäre es ungünstig, wenn aufgrund der Verformung des Reibkörpers eine Querkraft auf eine vorhandene Führung wirkt, so dass diese ebenfalls verformt wird.

Grundsätzlich sollte der Reibkörper in Bewegungsrichtung der antreibenden Piezokeramik möglichst steif aufgebaut werden, damit dieser die schnelle Beschleunigung der Piezokeramik möglichst verlustarm an den Reibkontakt weiterleiten kann.

In einer bevorzugten Ausführungsform ist der mindestens eine Reibkörper so ausgelegt, dass von diesem zwei Stangen, die in reibschlüssiger Verbindung mit dem Reibkörper stehen, jeweils teilweise umschlossen werden. Dabei sind die Reibflächen des Reibkörpers über flexible Stege mit einem Grundkörper, gegen den die Piezokeramik drückt oder zieht, verbunden.

Die Nachgiebigkeiten der flexiblen Stege sind nicht orthogonal zur Bewegungsrichtung des Piezoelementes, so dass, wenn Beschleunigungskräfte auf die Masse um die Reibflächen wirken, eine zusätzliche Kraft auf die Reibflächen wirkt. Diese zusätzliche Kraft kann, je nach Vorzeichen, die Anpresskraft vergrößern oder verkleinern.

In einer anderen Ausführungsform ist der mindestens eine Reibkörper so geformt, dass die Reibflächen nach außen zeigen und beispielsweise in eine anzutreibenden Führung reibend eingreifen. Die Reibflächen sind wiederum über flexible Stege mit einem Grundkörper verbunden, auf den die sich bewegende Piezokeramik einwirkt. Diese Stege sind zur Bewegungsrichtung etwas geneigt, so dass sie, je nach Neigungsrichtung, mit einer zusätzlichen Kraft auf die Reibkontakte wirken, wenn der Grundkörper schnell beschleunigt wird. Ursache dafür ist wiederum die Masse um die Reibfläche. Soll dieser Effekt verstärkt werden, so kann der Reibkörper modifiziert werden, indem von der Reibfläche zwei weitere zur Bewegungsrichtung der Piezokeramik geneigte Stege weggehen, die auf eine zusätzliche Masse führen. Die Trägheitskraft der ebenfalls beschleunigten Masse wirkt über die Stege zusätzlich auf die Reibflächen.

In einer konstruktiven Ausgestaltung kann die zusätzliche Masse von der Piezokeramik aus gesehen vor den Reibflächen liegen. In diesem Falle würde eine Beschleunigung aufgrund der Ausdehnung der Piezokeramik zu einem größeren Anpressdruck führen.

In einer weiteren konstruktiven Ausgestaltung kann die zusätzliche Masse, von der Piezokeramik aus gesehen, hinter den Reibflächen liegen. In diesem Falle würde der Effekt der zusätzlichen Masse den Anpressdruck bei einer Beschleunigung aufgrund der Ausdehnung der Piezokeramik reduzieren.

Liegt die zusätzliche Masse in einer Höhe mit den Reibflächen, so würde die Reibkraft bei einer hohen Beschleunigung aufgrund der Verformung der Piezokeramik immer reduziert werden, egal ob das Piezoelement sich schnell beschleunigt, ausdehnt oder zusammenzieht.

Die Erfindung wird nachfolgend beispielhaft anhand der beigefügten Zeichnungen näher erläutert. Es zeigen:

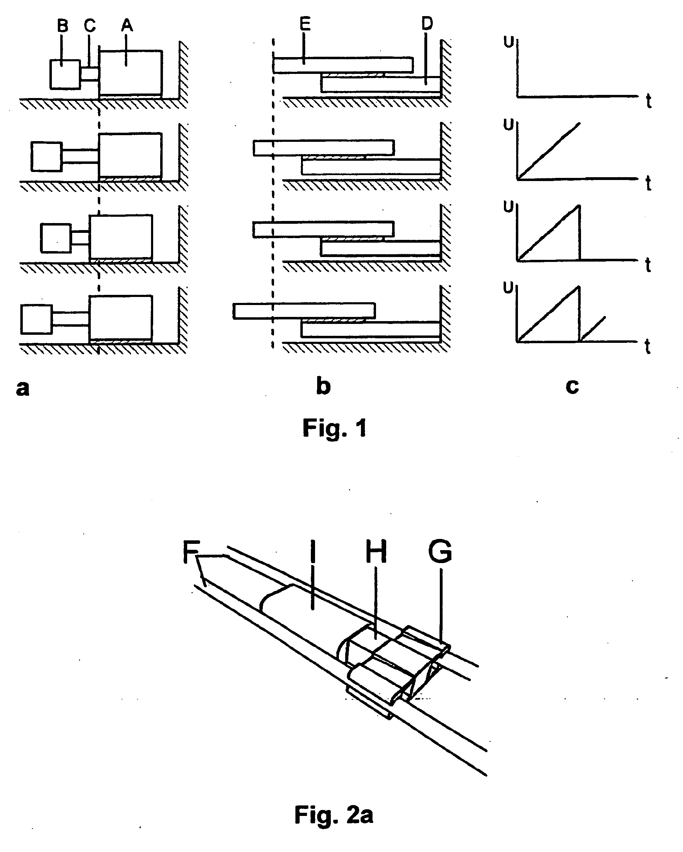

Figur 1 a)   Skizze des prinzipiellen Aufbaus eines Impact-Drive-Trägheitsantriebs;

Figur 1b)   Skizze des prinzipiellen Aufbaus eines Slip-Stick-Trägheitsantriebs;

Figur 1 c)   Spannungsverlauf über der Zeit zur Ansteuerung der Trägheitsantriebe;

Figur 2 a)   Beispielhafte Ausführung eines Trägheitsantriebes;

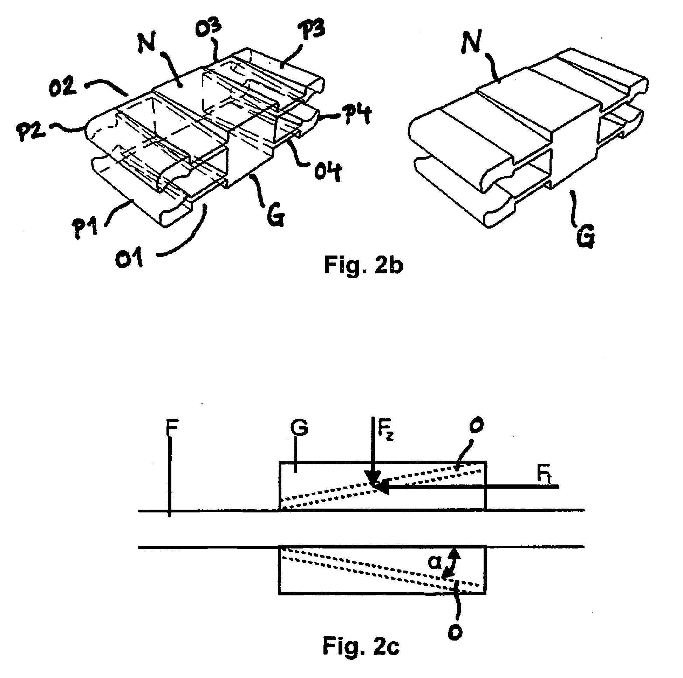

Figur 2 b)   Detaillierte Ansicht des in Fig. 2 a) dargestellten Reibköpers in einer ersten Ausführung;

Figur 2 c)   Skizzierte Darstellung der wirkenden Kräfte im Falle einer Beschleunigung, wie sie im Betrieb des Positionierers auftreten;

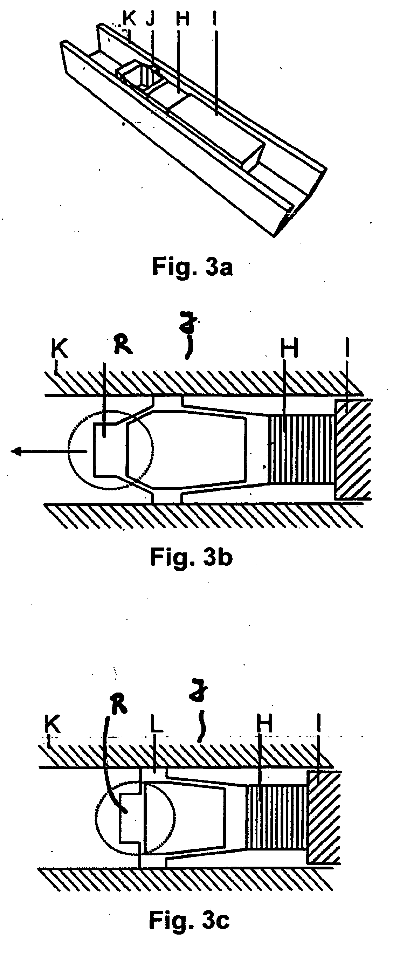

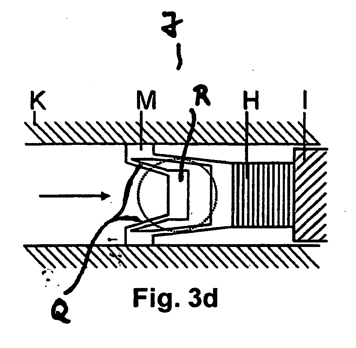

Figur 3 a)   Beispielhafte Ausführung eines weiteren Trägheitsantriebs mit einem Reibkörper, der die erfindungsgemäßen Merkmale aufweist Zusatzwassen nicht darjestellt).

Figur 3 b)   Beispielhafte erfindungsgemäße Ausführung eines Reibkörpers mit reibungskraftverstärkender Wirkung im Falle einer schnellen Beschleunigung in Richtung des eingezeichneten Pfeils;

Figur 3 c)   Beispielhafte erfindungsgemäße Ausführung eines Reibkörpers mit reibungskraftabschwächender Wirkung im Falle einer schnellen Beschleunigung des Reibkörpers;

Figur 3 d)   Beispielhafte erfindungsgemäße Ausführung eines Reibkörpers mit reibungskraftverstärkender Wirkung im Falle einer schnellen Beschleunigung in Richtung des eingezeichneten Pfeils;

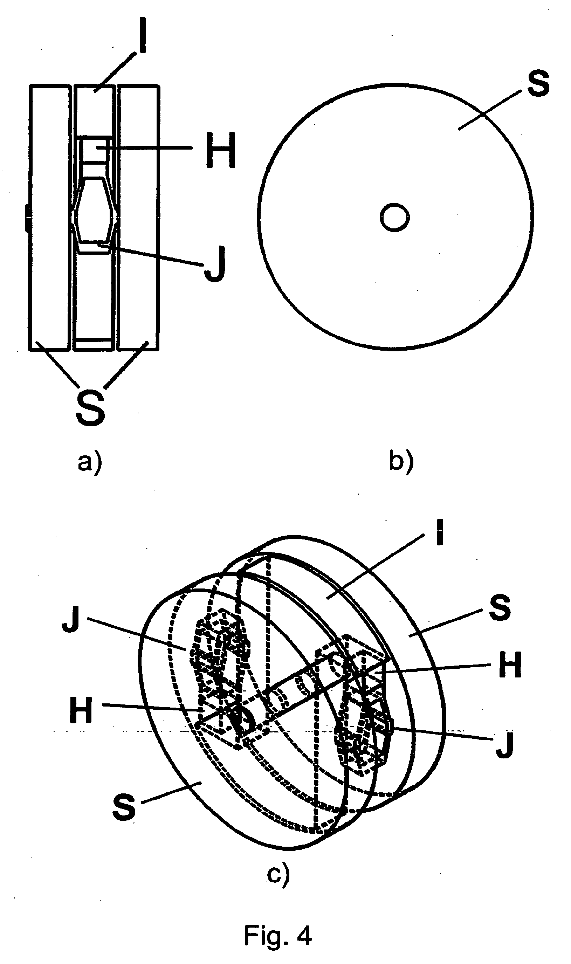

Figur 4 a)   Skizze einer Seiteneinsicht eines beispielhaften rotatorischen Trägheitsantriebs mit erfindungsgemäßer Ausführung eines Reibkörpers (Zusatzmassen nicht dargestellt).

Figur 4 b)   Draufsicht auf den rotatorischen Trägheitsantrieb aus Figur 4 a);

Figur 4 c)   Perspektivische Darstellung des rotatorischen Trägheitsantriebs aus Figur 4 a).

Figur 1 a) lässt den prinzipiellen Aufbau eines eingangs beschriebenen Impact-Drive-Antriebs erkennen, der aus zwei Körpern A und B besteht, die über eine Piezokeramik C verbunden sind. Der Körper A steht in reibschlüssiger Verbindung mit einer Ebene. So lange die Beschleunigung des Körpers B, die durch die Piezokeramik C erzwungen wird, verhältnismäßig gering ist, wird der Körper A aufgrund der Reibung nicht über die Oberfläche rutschen. Bei einer großen Beschleunigung wird der Körper A allerdings über die Oberfläche gleiten, da die Trägheitskraft des Körpers B größer ist als die Reibungskraft.

Figur 1 b) lässt das Prinzip von Slip-Stick-Antrieben erkennen, bei denen ein Aktor D auf einer Seite an einer nicht beweglichen Masse befestigt ist. Der Körper E steht mit dem Aktor D in Reibkontakt. Wenn der Aktor D durch das Anlegen einer sich allmählich ändernden Spannung gering beschleunigt wird, so wird der Körper E mitbewegt. Bei einer großen Beschleunigung des Aktors D ist die Trägheitskraft des Körpers E größer als die Haftreibung, so dass es zu einer relativen Bewegung zwischen dem Körper E und dem Aktor D kommt.

Figur 1 c) lässt den zum Antrieb der dargestellten Trägheitsantriebe üblichen Spannungsverlauf über die Zeit erkennen. Es wird deutlich, dass zunächst eine sich langsam ändernde Spannung angelegt wird, die nach Erreichen einer maximalen Spannung abrupt auf einen Ausgangswert reduziert wird. In dieser Phase wird eine hohe Beschleunigung des Stators erreicht.

Die in Fig. 2 a) dargestellte Antriebseinheit stellt eine auf wesentliche Elemente beschränkte Trägheitsantriebsvorrichtung dar. Diese Komponenten sind:

- Zwei Stangen, die eine Schiene F mit Reibflächen formen, auf der ein Reibkörper G reibschlüssig gleitet.

- Ein piezokeramischer Aktor H, welcher sich durch das Anlegen der Spannung verformt.

- Eine Masse I, mit der die Piezokeramik fest verbunden ist.

Wird das zu positionierende Objekt mit dem Reibkörper G reibschlüssig verbunden, so handelt es sich um einen Impact-Drive-Antrieb, wird das zu positionierende Objekt hingegen an der Masse I befestigt, so handelt es sich um einen Slip-Stick-Antrieb.

In Fig. 2 b) ist ein beispielhafter Reibkörper dargestellt. Er besteht aus einem zentralen Körper N, der im eingebauten Zustand gegen ein Piezoelement (piezokeramischer Aktor) drückt. Von diesem zentralen Körper N gehen vier Stege 01, 02, 03, 04 aus, an deren Enden sich Reibflächen P1, P2, P3, P4 befinden. Die Reibflächen P sind im abgebildeten Fall so geformt, dass diese die in Fig. 2 a gezeigten Stangen teilweise umgreifen. Durch ein Untermaß wird erreicht, dass der Reibkörper G nur unter Aufbringung einer die Reibkräfte übersteigenden Kraft relativ zu den in der Fig. 2 a dargestellten Stangen bewegt werden kann.

Dadurch, dass die Nachgiebigkeit der Stege des Reibkörpers G nicht orthogonal zur Bewegungsrichtung des Piezoelementes steht, kommt es bei einer schnellen Beschleunigung des Reibkörpers G zu einer Veränderung des Anpressdrucks der Reibfläche auf den Stangen und damit zu einer Veränderung des Laufverhaltens.

Anhand Fig. 2c ist die Funktionsweise erklärt. Zu sehen ist eine vereinfachte Seitenansicht eines Reibkörpers G und der im Reibkörper G befindlichen Stangen.

Durch die gepunktete Linie ist der Verlauf der verdeckten flexiblen Stege O dargestellt. Im Stillstand werden die Reibflächen des Reibkörpers G und der Stangen F aufgrund des Untermaßes des Reibkörpers G mit einer definierten Kraft $F_a$ aufeinander gedrückt. Wird nun der Reibkörper G entlang der Stangen F beschleunigt, so wirken Trägheitskräfte $F_t$ auf diesen. Bei der Betrachtung der an den Enden der Stege O befindlichen Reibflächen lässt sich folgendes feststellen:

Der Reibkörper G weist im Bereich um die Reibfläche eine Masse m auf, die ebenfalls beschleunigt wird. Dem entgegen wirkt die Trägheitskraft $F_t$ in Abhängigkeit von der Beschleunigung a.

$$F_t = m*a$$

Wie der Fig. 2 c) zu entnehmen ist, ist jeder Steg O des Reibkörpers G gegenüber der Bewegungsrichtung um den Winkel $\alpha$ verdreht, so dass ein Teil der Trägheitskraft $F_t$ orthogonal auf die Reibfläche wirkt und damit den Anpressdruck um die Kraft $F_z$ erhöht bzw. verringert. Unter vereinfachten Annahmen gilt für diese zusätzlich wirkende Kraft:

$$F_z=F_t*tan(\alpha)$$

Folglich wirkt $F_z$, je nach Richtung der Beschleunigung bzw. der Trägheitskraft, reibkraftverstärkend, oder -schwächend.

Die in Fig. 3 a) dargestellte Prinzipskizze wird herangezogen, um weitere Ausprägungen eines Reibkörpers J darzustellen und zu erklären. Zu sehen ist eine Führung K, in der unter leichter Pressung ein Reibkörper J läuft. An diesem Reibkörper ist ein piezokeramischer Aktor H befestigt. Auf der gegenüberliegenden Seite ist der piezokeramische Aktor H mit einer Masse I verbunden. Wird das zu positionierende Objekt mit der Masse I verbunden, so handelt es sich um einen Slip-Stick-Antrieb. Wird das zu positionierende Objekt im Bereich zwischen Piezoelement H und Reibkörper J befestigt, so handelt es sich um einen Impact-Drive-Antrieb.

Im Folgenden werden drei Ausprägungen für den in Fig. 3 a) dargestellten Antrieb vorgestellt, bei denen die Reibungskörper J erfindungsgemäß so ausgeführt sind, dass diese bei einer hohen Beschleunigung während der Slip-Phase einen wesentlichen Einfluss auf die Anpresskraft haben und somit das Laufverhalten des Positionierers beeinflussen. Jeder der Reibkörper J hat eine andere Wirkung auf das Laufverhalten.

Der in Fig. 3 b) dargestellte Reibkörper J hat eine reibkraftverstärkende Wirkung, wenn dieser relativ schnell nach links beschleunigt wird. Mit einer zusätzlichen Masse R, die in der Abbildung durch die gestrichelte Linie eingekreist ist, kann die Größe dieses Effektes festgelegt werden.

Der in Fig. 3 c) dargestellte Reibkörper J hat im Falle einer hohen Beschleunigung aufgrund der Anordnung des Reibkörpers J eine reibkraftabschwächende Wirkung, egal, ob der Reibkörper J nach links oder rechts beschleunigt wird. Wenn die zusätzliche Masse R, in der Fig. 3 c) durch die gestrichelte Linie umrahmt, beschleunigt wird, so ziehen die Arme Q, die die zusätzliche Masse R mit dem sonstigen Reibkörper J verbinden, die Reibflächen nach innen, so dass die Reibkraft reduziert wird. Diese reibkraftabschwächende Eigenschaft kann sinnvoll sein, wenn z. B. ein Durchrutschen im dynamischen Betrieb schnell erzielt werden soll, aber im Stillstand trotzdem eine hohe Haltekraft erwünscht ist. Ein frühes Durchrutschen ermöglicht es, dass auch bei geringen Ansteuerspannungen schon kleinere Schritte durchgeführt werden können. Im Stillstand und in der Phase der langsamen Piezoauslenkung weisen solche Positionierer trotzdem eine hohe Haltekraft auf. Somit weisen solche Aktoren ein verbessertes Verhalten auf.

Die Wirkung des in Fig. 3 d) dargestellten Reibkörpers J ist der Wirkung des anhand Fig. 3 b) beschriebenen Reibkörpers J entgegengesetzt. Wird die Masse M und die zusätzliche Masse R schnell nach rechts beschleunigt, so wird der Anpressdruck verstärkt, während bei einer Beschleunigung nach links der Anpressdruck verringert wird.

Figur 4 a) lässt eine Skizze eines beispielhaften rotatorischen Trägheitsantriebes in der Seitenansicht erkennen. In dem dargestellten Beispiel sind zwei piezokeramische Aktoren H fest mit einer gemeinsamen Masse I verbunden. In Bewegungsrichtung, jeweils auf der anderen Seite des piezokeramischen Aktors H sind Reibkörper J befestigt, die Reibkontakt mit zwei auf einer durch die Masse I hindurchgeführte Welle rotatorisch gelagerte Scheiben S stehen. Die Scheiben S beidseits der Masse I stehen relativ zueinander in einer fixen Position. Durch die Ansteuerung der piezokeramischen Aktoren H in einer für Trägheitsantriebe typischen Weise drehen sich die Scheiben S relativ zu der Masse I.

Figur 4 b) lässt eine Draufsicht auf den in der Figur a) dargestellten Antrieb erkennen. Es wird deutlich, dass die Scheiben S vorzugsweise kreisförmig sind.

Figur 4 c) lässt eine perspektivische Ansicht des in der Figur 4 a) dargestellten Trägheitsantriebs erkennen. Dabei wird deutlich, dass die Masse I Ausschnitte hat, in die die piezokeramischen Aktoren H und die Reibkörper J eingebracht sind, so dass die Masse I eine Art S-Form bildet. Die piezokeramischen Aktoren H sind auf den Absätzen der Ausschnitte fest montiert. An der gegenüberliegenden Seite sind die Reibkörper J mit der piezokeramischen Aktoren H fest verbunden. Die Reibkörper J sind hierbei entsprechend der in den Figuren 3 b) bis 3 d) dargestellten Weise ausgeführt.

## Patentansprüche

1. Trägheitsantriebsvorrichtung mit mindestens einem auf einer Reibfläche beweglich gelagerten Reibkörper (G, J), der zur Beschleunigung in vorgegebene Bewegungsrichtungen antreibbar ist, wobei der Reibkörper (G, J) in Abhängigkeit von der Beschleunigung deformierbar und derart ausgestaltet ist, dass eine durch die Einwirkung einer Beschleunigung verursachte Verformung des Reibkörpers (G, J) zur Beeinflussung der Reibeigenschaften zwischen Reibkörper (G, J) und Reibfläche auf die Reibfläche geleitet wird, wobei

   der Reibkörper (G, J) derart ausgestaltet ist, dass mit zunehmender Beschleunigung in eine erste Bewegungsrichtung durch die Verformung des Reibkörpers (G, J) die zwischen Reibkörper (G, J) und Reibfläche wirkende Klemmkraft erhöht und mit zunehmender Beschleunigung in eine zweite Bewegungsrichtung, die der ersten Bewegungsrichtung entgegengesetzt ist, durch die Verformung des Reibkörpers (G, J) die zwischen Reibkörper (G, J) und Reibfläche wirkende Klemmkraft reduziert wird, **dadurch gekennzeichnet, dass** der Reibkörper (G, J) an mindestens einer definierten Position mit zusätzlicher Masse (L, M, R) zur gezielten Beeinflussung des Laufverhaltens des Trägheitsantriebes versehen ist.

2. Trägheitsantriebsvorrichtung nach Anspruch 1, **gekennzeichnet durch**

   einen mit dem Reibkörper (G, J) verbundenen piezokeramischen Aktor (H), der ausgebildet ist, um sich bei Beaufschlagung mit einer Spannung in Abhängigkeit von dem Spannungsverlauf auszudehnen oder zusammenzuziehen und dabei dem Reibkörper (G, J) eine Beschleunigung aufzuprägen.

3. Trägheitsantriebsvorrichtung nach Anspruch 1, **dadurch gekennzeichnet, dass**

   der Reibkörper (G, J) einen integrierten piezokeramischen Aktor (H) hat, der ausgebildet ist, um sich bei Beaufschlagung mit einer Spannung in Abhängigkeit von dem Spannungsverlauf auszudehnen oder zusammenzuziehen und dabei dem Reibkörper (G, J) eine Beschleunigung aufzuprägen.

4. Trägheitsantriebsvorrichtung nach einem der vorhergehenden Ansprüche, **dadurch gekennzeichnet, dass**

   die Position und die Größe der Masse (L, M, R) ausgewählt ist, um eine vorgegebene Variation der Anpresskraft in Abhängigkeit von der Größe der Beschleunigung zu bewirken.

5. Trägheitsantriebsvorrichtung nach einem der vorhergehenden Ansprüche, **dadurch gekennzeichnet, dass**

die zusätzliche Masse (L, M, R) als separate Masseelemente mit dem Reibkörper (G, J) verbunden sind.

6. Trägheitsantriebsvorrichtung nach einem der vorhergehenden Ansprüche,
**dadurch gekennzeichnet, dass**
die zusätzliche Masse integraler Bestandteil des Reibkörpers (G, J) ist.

7. Trägheitsantriebsvorrichtung nach einem der vorhergehenden Ansprüche,
**dadurch gekennzeichnet, dass**
die Reibfläche die Oberfläche von mindestens zwei parallel zueinander sich in eine Bewegungsrichtung erstreckende Führungsstangen (F) ist und der Reibkörper (G) die Führungsstangen (F) teilweise umschließende Reibkontakte hat, die über flexible Stege (0) mit einem Grundkörper des Reibkörpers (G) verbunden sind, wobei die flexiblen Stege (0) eine Richtung mit großer Nachgiebigkeit aufweisen, die in einem spitzen Winkel zu einer Orthogonalen auf der Bewegungsrichtung des Aktors (H) steht, so dass bei Einwirkung von Beschleunigungskräften in Bewegungsrichtung auf die Masse der Reibkontakte (G) durch die Verformung der flexiblen Stege in Richtung der Nachgiebigkeit eine zusätzliche positive oder negative Kraft auf die Reibflächen wirkt.

8. Trägheitsantriebvorrichtung nach einem der Ansprüche 1 bis 6,
**dadurch gekennzeichnet, dass**
die Reibflächen durch die Oberflächen von Wänden eines Führungskanals für den Reibkörper (J) gebildet sind und der Reibkörper (J) an den Reibflächen des Führungskanals (K) relativ hierzu beweglich anliegende Reibkontakte hat, die über flexible Stege mit einem Grundkörper des Reibkörpers (G, J) verbunden sind, wobei die flexiblen Stege sich in einem Neigungswinkel geneigt zur definierten Bewegungsrichtung erstrecken, wobei der Neigungswinkel derart gewählt ist, dass bei Einwirkung von Beschleunigungskräften in Bewegungsrichtung auf die Masse (L, M, R) der Reibkontakte (J) durch eine Verformung der flexiblen Stege eine zusätzliche positive oder negative Kraft auf die Reibflächen wirkt.

9. Trägheitsantriebsvorrichtung nach Anspruch 8,
**dadurch gekennzeichnet, dass**
ein weiterer Massekörper (L, M, R) mit den Reibkontakten (J) in Verbindung steht, um den Anpressdruck der Reibkontakte (J) durch die auf den weiteren Massekörper (L, M, R) wirkende Beschleunigungskraft zu erhöhen oder zu reduzieren.

10. Trägheitsantriebsvorrichtung nach Anspruch 9,
**dadurch gekennzeichnet, dass**
der weitere Massekörper auf einer Achse in Bewegungsrichtung von dem Reibkörper (J) aus gesehen hinter den Reibflächen liegt.

11. Trägheitsantriebsvorrichtung nach Anspruch 9,
**dadurch gekennzeichnet, dass**
der weitere Massekörper (R) auf einer Achse in Bewegungsrichtung von dem Reibkörper (J) aus gesehen zwischen Reibkörper (J) und Reibflächen liegt.

**Claims**

1. Inertia drive device having a friction body (G, J) movably mounted on a friction surface, which can be driven in predefined directions of movement in order to be accelerated, wherein the friction body (G, J) is deformable depending on the acceleration and is configured in such a way that a deformation of the friction body (G, J) caused by the impact of an acceleration is transmitted to the friction surface so as to influence the frictional properties between the friction body (G, J) and the friction surface,
wherein the friction body (G, J) is configured in such a way that the clamping force acting between the friction body (G, J) and the friction surface is increased as a result of the deformation of the friction body (G, J) as the acceleration into a first direction of movement increases, and that the clamping force acting between the friction body (G, J) and the friction surface is reduced as a result of the deformation of the friction body (G, H) as the acceleration into a second direction of movement, which is opposite to the first direction of movement, increases,
**characterized in that**
the friction body (G, J) is provided with an additional mass (L, M, R) on at least one defined position for deliberately influencing the running property of the inertia drive.

2. Inertia drive device according to claim 1,
**characterized by**
a piezoceramic actuator (H) connected to the friction body (G, J), which is configured to expand or contract when a voltage is applied, depending on the voltage curve, and thereby induce an acceleration of the friction body (G, J).

3. Inertia drive device according to claim 1,
**characterized in that**
the friction body (G, J) has an integrated piezoceramic actuator (H), which is configured to expand or contract when a voltage is applied, depending on the voltage curve, and thereby induce an acceleration of the friction body (G, J).

4. Inertia drive device according to one of the preceding claims,
**characterized in that**

the position and the size of the mass (L, M, R) is selected to obtain a predefined variation of the pressing force depending on the extent of the acceleration.

5. Inertia drive device according to one of the preceding claims,
**characterized in that**
the additional mass (L, M, R) is connected to the friction body (G, J) in the form of separate mass elements.

6. Inertia drive device according to one of the preceding claims,
**characterized in that**
the additional mass is an integral part of the friction body (G, J).

7. Inertia drive device according to one of the preceding claims,
**characterized in that**
the friction surface is the surface of at least two guide rods (F) extending parallel to each other in one direction of movement and the friction body (G) has frictional contacts partially enclosing the guide rods (F), which are connected to a base body of the friction body (G) by means of flexible webs (0), wherein the flexible webs (0) have one direction exhibiting a great resilience being at an acute angle relative to an orthogonal on the direction of movement of the actuator (H), so that, when accelerating forces act on the mass of the frictional contacts (G) in the direction of movement due to the deformation of the flexible webs in the direction of resilience, an additional positive or negative force acts on the friction surfaces.

8. Inertia drive device according to one of claims 1 to 6,
**characterized in that**
the friction surfaces are formed by the surfaces of walls of a guide channel for the friction body (J) and the friction body (J) has frictional contacts, which are movably adjacent relative to the friction surfaces of the guide channel (K) and are connected to a base body of the friction body (G, J) by flexible webs, wherein the flexible webs extend inclined at an angle of inclination to the defined direction of movement, wherein the angle of inclination is selected such that, when accelerating forces act on the mass (L, M, R) of the frictional contacts (J) in the direction of movement due to a deformation of the flexible webs, an additional positive or negative force acts on the friction surfaces.

9. Inertia drive device according to claim 8,
**characterized in that**
a further mass body (L, M, R) is connected to the frictional contacts (J) to increase or reduce the contact pressure of the frictional contacts (J) by the accelerating force acting on the further mass body (L, M, R).

10. Inertia drive device according to claim 9,
**characterized in that**
seen from the friction body (J) in the direction of movement, the further mass body is situated on an axis behind the friction surfaces.

11. Inertia drive device according to claim 9,
**characterized in that**
seen from the friction body (J) in the direction of movement, the further mass body (R) is situated on an axis between the friction body (J) and the friction surfaces.

**Revendications**

1. Dispositif d'entraînement par inertie comprenant au moins un corps à friction (G, J) monté mobile sur une surface de friction, lequel peut être entraîné en vue d'une accélération dans des directions de déplacement prédéterminées, dans lequel le corps à friction (G, J) est déformable en fonction de l'accélération et conçu de telle façon qu'une déformation du corps à friction (G, J), provoquée par l'action d'une accélération, est dirigée vers la surface de friction pour influencer les propriétés de friction entre le corps à friction (G, J) et la surface de friction, dans lequel le corps à friction (G, J) est conçu de telle façon que lors d'une accélération croissante dans une première direction de déplacement la force de serrage agissant entre le corps à friction (G, J) et la surface de friction est augmentée par la déformation du corps à friction (G, J), et que lors d'une accélération croissante dans une seconde direction de déplacement, opposée à la première direction de déplacement, la force de serrage agissant entre le corps à friction (G, J) et la surface de friction est réduite par la déformation du corps à friction (G, J),
**caractérisé en ce que** le corps à friction (G, J) est dotée, à au moins une position définie, d'une masse additionnelle (L, M, R) pour influencer de façon ciblée le comportement de déplacement de l'entraînement par inertie.

2. Dispositif d'entraînement par inertie selon la revendication 1, **caractérisé par** un actionneur piézocéramique (H) relié au corps à friction (G, J), qui est réalisé, lors de l'application d'une tension, pour s'allonger ou pour se contracter en fonction de l'évolution de tension et imposer alors une accélération au corps à friction (G, J).

3. Dispositif d'entraînement par inertie selon la revendication 1, **caractérisé en ce que** le corps à friction (G, J) possède un actionneur piézocéramique intégré (H) qui est réalisé, lors de l'application d'une tension, pour s'allonger ou pour se contracter en fonction de l'évolution de tension et imposer alors une accélération au corps à friction (G, J).

4. Dispositif d'entraînement par inertie selon l'une des revendications précédentes,
   **caractérisé en ce que** le la position et la taille de la masse (LM, R) sont choisies pour entraîner une variation prédéterminée de la force de pressage en fonction de l'intensité de l'accélération.

5. Dispositif d'entraînement par inertie selon l'une des revendications précédentes,
   **caractérisé en ce que** la masse additionnelle (L, M, R) est réalisée sous forme d'éléments de masse séparés reliés au corps à friction (G, J).

6. Dispositif d'entraînement par inertie selon l'une des revendications précédentes,
   **caractérisé en ce que** la masse additionnelle est un composant intégral du corps à friction (G, J).

7. Dispositif d'entraînement par inertie selon l'une des revendications précédentes,
   **caractérisé en ce que** la surface de friction est la surface d'au moins deux tiges de guidage (F) qui s'étendent parallèlement l'une à l'autre dans une direction de déplacement, et le corps à friction (G) possède des contacts de friction qui entourent partiellement les tiges de guidage (F), ces contacts étant reliés via des barrettes flexibles (O) avec un corps de base du corps à friction (G), les barrettes flexibles (O) présentant une direction à grande flexibilité, disposée sous un angle aigu par rapport à une perpendiculaire à la direction de déplacement de l'actionneur (H), de sorte que lors de l'action de forces d'accélération en direction de déplacement sur la masse des contacts à friction (G), une force additionnelle positive ou négative agit sur les surfaces de friction en raison de la déformation des barrettes flexibles en direction de la flexibilité.

8. Dispositif d'entraînement par inertie selon l'une des revendications 1 à 6,
   **caractérisé en ce que** les surfaces de friction sont formées par les surfaces de paroi d'un canal de guidage pour le corps à friction (3), et le corps à friction (J) possède des contacts de friction appliqués contre les surfaces de friction du canal de guidage (K) de façon déplaçable par rapport à celui-ci, ces contacts étant reliés via des barrettes flexibles à un corps de base du corps à friction (G, J), et les barrettes flexibles s'étendent sous un angle d'inclinaison par rapport à une direction de déplacement définie, ledit angle d'inclinaison étant choisi de telle façon que lors de l'action de forces d'accélération en direction de déplacement sur la masse (L, M, R) des contacts de friction (J), une force additionnelle positive ou négative agit sur les surfaces de friction en raison d'une déformation des barrettes flexibles.

9. Dispositif d'entraînement par inertie selon la revendication 8,
   **caractérisé en ce qu'**un autre corps de masse (L, M, R) est en liaison avec les contacts de friction, afin d'augmenter ou de réduire la pression de pressage des contacts de friction (J) par la force d'accélération agissant sur l'autre corps de masse (L, M, R).

10. Dispositif d'entraînement par inertie selon la revendication 9,
    **caractérisé en ce que** l'autre corps de masse, vu depuis le corps à friction (J), est disposé derrière les surfaces de friction sur un axe en direction de déplacement.

11. Dispositif d'entraînement par inertie selon la revendication 9,
    **caractérisé en ce que** l'autre corps de masse (R), vu depuis le corps à friction (J), est disposé entre le corps à friction (J) et les surfaces de friction sur un axe en direction de déplacement.

a          b          c

**Fig. 1**

**Fig. 2a**

Fig. 2b

Fig. 2c

K J  H  I

**Fig. 3a**

K  R  J  H  I

**Fig. 3b**

K  R  L  J  H  I

**Fig. 3c**

Fig. 3d

I

H

J

S

a)

S

b)

J

H

H

I

S

H

J

S

c)

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004077584 A
- US 5237238 A1
- EP 0747977 A1
- EP 0823738 B1
- WO 2004077584 A1
- WO 0054004 A1
- WO 0243162 A1
- JP 4207982 A
- JP 4030989 A
- US 6188161 B1

**In der Beschreibung aufgeführte Nicht-Patentliteratur**

- *Review of Scientific Instruments,* Januar 1987, vol. 58 (1), 54-57
- *Review of Scientific Instruments,* Februar 1988, vol. 59 (2), 368-369
- **A. BERGANDER.** Control wear testing and integration of slip-stick micropositioning. *Dissertation Nr. 2843, EPFL Lausanne, Schweiz,* 2003